Europäisches Patentamt

European Patent Office

Office européen des brevets

(11) Publication number: **0 492 097 A2**

# EUROPEAN PATENT APPLICATION

(21) Application number: **91118955.3**

(22) Date of filing: **07.11.91**

(51) Int. Cl.⁵: **H02K 9/22**, H02K 1/24

(30) Priority: **28.12.90 JP 21214/90**
   **12.08.91 US 743828**

(43) Date of publication of application:
   **01.07.92 Bulletin 92/27**

(84) Designated Contracting States:
   **AT BE CH DE DK ES FR GB IT LI NL SE**

(71) Applicant: **ICC- INTERNATIONAL
   COMPONENTS CORPORATION
   ELEKTROBAUELEMENTE GmbH EUROPA
   Steinbacher Strasse 47-51
   W-8501 Burgthann-Ezelsdorf(DE)**

(72) Inventor: **Oki, Sigetaka
   1403-23-606 Matano-cho
   Totsukaku, Yokohama Citz(JP)**

(74) Representative: **Patentanwälte Czowalla .
   Matschkur + Partner
   Dr.-Kurt-Schumacher-Strasse 23 Postfach
   9109
   W-8500 Nürnberg 11(DE)**

(54) Rotor for use in a miniature motor.

(57) A rotor for a miniature motor includes a core having a plurality of laminations of magnetic material, a plurality of windings wound around the laminations, a shaft extending axially through the center of the laminations, a commutator mounted on the shaft and located near one end of the laminations and extending coaxial with the laminations and a blower element mounted on the laminations and contacting at least the laminations for conducting heat away from the laminations for directing air axially of the rotor as the rotor rotates.

FIG. 1

## Background of the Invention

This invention relates to miniature motors and more particularly to an arrangement for air cooling miniature motors in use.

Formerly, the air cooling method has been used inside the casing of high-speed miniature motors for cooling the motors in use. Typically, a fan or blower element, having a plurality of blades was attached to the end of a rotor or to the end of a commutator. The blades extended radially outward from the axis of the rotor shaft. One problem associated with such prior art cooling method is the difficulty in assembling a separate fan element to the rotor within the small space of the housing provided by a miniature motor. This problem is complicated by the fact that the location where the fan element is attached is usually at the commutator side of the rotor, where the commutator would possibly contact the winding of the rotor because the commutator is located closer to the rotor. With this former type of fan element which is located remotely from the heat producing elements of the rotor, cool air directed towards the heat producing elements of the rotor, is rendered ineffective because hot air is being emitted by the heat producing elements of the rotor.

## Summary of the Invention

The present invention provides a rotor assembly for use in a miniature motor.

The rotor includes a core having a plurality of laminations of magnetic material, at least one winding wound around the laminations, a shaft extending axially through the center of the laminations and a commutator mounted on the shaft and located near one end of the laminations and coaxial with the laminations. The rotor further includes cooling means contacting at least the laminations for conducting heat away from the laminations and defining air directing means for directing air axially of the rotor as the rotor rotates.

The invention consists of certain novel features and structural details hereinafter fully described, illustrated in the accompanying drawings, and particularly pointed out in the appended claims, it being understood that various changes in the details may be made without departing from the spirit, or sacrificing any of the advantages of the present invention.

## Description of the Drawings

For the purpose of facilitating and understanding the invention, there is illustrated in the accompanying drawings a preferred embodiment thereof, from an inspection of which, when considered in connection with the following description, the invention, its construction and operation, and many of its advantages will be readily understood and appreciated.

FIG. 1 is an isometric view of a rotor incorporating the cooling arrangement provided by the present invention;

FIG. 2 is an isometric view of an air moving element for the rotor of FIG. 1; and

FIG. 3 is an alternative embodiment for an air moving element for the rotor of FIG. 1.

## Description of a Preferred Embodiment

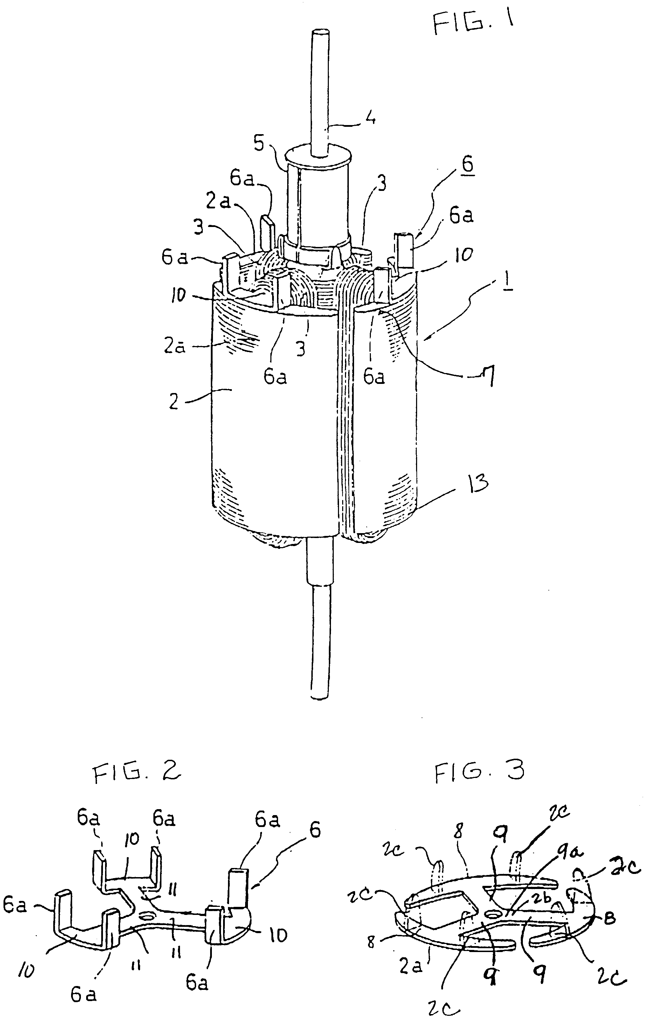

Referring to FIG. 1, there is illustrated a three-pole rotor 1 which incorporates the air cooling arrangement provided by the present invention. The rotor 1 includes a core formed by laminations 2 consisting of a plurality of elements 2a of magnetic material. The elements 2a are stacked together in the direction of the axis of the rotor. A plurality of windings 3 are wound on the laminations 2. A shaft 4 extends through the center of the laminations 2 and carries a commutator 5 which is located adjacent to one end 7 of the laminations 2. The commutator 5 is coaxial to the laminations 2 and to the rotary axis. The rotor 1 further includes at least one air moving element or blower element 6 which is constructed and arranged to create air flow outwardly from the rotor 1 at the end 7 of the laminations 2. The blower element 6 includes a plurality of blades 6a which are generally rectangular in shape and which extend in the direction of the axis of the rotor in the assembled rotor. The blades are located at the outer edge of the laminations 2.

Referring to FIG. 3, each of the elements 2a comprises three crescent-shaped portions 8 supported by three spokes 9 which together with a hub 9a, define a base portion 2b for the lamination element 2a. The windings 3 are wound around the spoke portions 9 of the stacked together elements 2a which comprise the laminations 2.

Referring to FIG. 2, there is illustrated one embodiment for a blower element 6. The blower element 6 is similar in shape to the lamination elements 2a in that it has three arcuate segments 10 supported by three spokes 11 which extend radially outward from hub 12. The ends of the arcuate segments 10 are turned up defining a pair of the blades 6a for each segment 10. The blades 6a extend outwardly from the laminations and in the direction of the axis of the rotor 1. Ideally, the blower element 6 is made from aluminum, iron, copper, or other metal of good thermal conductivity. However, in some applications where only indirect cooling is provided, the blower element 6 may be made of synthetic resin.

As illustrated in FIG. 1, the blower element 6 is mounted on the end lamination element 2a of the laminations 2 and the spokes 11 are aligned with the spokes 9 of the lamination elements 2a. The windings 3 are wound around the spokes 11 of the blower element 6 as well as the spokes 9 of the elements 2a.

The blades 6a of blower element 6 are integral with the structure of the rotor 1. The blower element 6 is connected to the uppermost element 2a of the laminations 2 of the rotor 1 because in the manufacture of the rotor 1, the lamination 2, the winding 3, and the blower element 6 are subjected to heat treatment after being assembled together. This results in a very high thermal bond or connection between the blower element 6, the laminations 2 and the windings 3 so that the cooling effect of the rotor 1 itself is very high.

In the embodiment illustrated in FIGS. 1 and 2, the blower element 6 is a separate element. In accordance with a further embodiment of the invention, illustrated in FIG. 3, the function of the blower element 6 is provided by bending the edges of the uppermost element 2a of the laminations 2 to define blades 2c illustrated by the dashed lines in FIG. 3 with the blades 2c extending in the direction of the axis of the rotor 1 in the assembled rotor.

Referring again to FIG. 1, in the embodiment for the rotor 1 there illustrated, the blower element 6 is assembled with the rotor near the end 7 of the laminations and adjacent to the commutator 5 of the rotor 1. It is also possible to attach the blower element 6 to the end 13 opposite to the commutator 5 of the rotor 1. With such mounting the same air movement force will be produced.

The invention improves the effect of direct cooling of the rotor 1 which is not obtainable through the use of a separate fan element as has been employed in the prior art. With the former type of fan, cooling air is directed toward the heat producing elements of the rotor, namely the commutator 5 and wound core formed of laminations 2 and windings 3, while hot air is being radiated from these heating elements. The windings 3, commutator 5 and other heating elements of the rotor 1 are cooled only indirectly by this air cooling method.

In accordance with the present invention, the blower element 6 according to the embodiments of FIGS. 2 or 3, which is integral with and in thermal contact with the laminations 2 has close contact with the source of heat being emitted from the windings 3, conducting heat away from these heat sources, and also works as a cooling fan in a manner similar to the prior art cooling fans for creating air flow axially of the rotor and towards the commutator during high speed rotation of the rotor. As a result, the blower element 6 cools the rotor 1 directly due to its heat conduction and its proximity to the laminations 2 and windings 3. Moreover, the blower element 6 provides indirect cooling effect to the heat generated by the commutator 5 by directing air toward the commutator 5. The effect of directing air cooling of this kind can be increased by establishing two blower elements 6, one at each of the ends 7 and 11 of the laminations 2 and directing the air flow axially of the rotor 1.

Because the blower element 6 is an integral part of the rotor 1, there will be no significant change in the assembly of the motor with which the rotor 1 is used. Also, the cooling effect is higher than that achievable solely through the use of a fan element as is done in known prior art cooling arrangements because the blower element 6 is directly in contact with one of the heating elements of the rotor 1 and is indirectly in contact with the commutator 5. The present invention makes it possible to produce a concise and miniature rotor which provides air flow to reduce the effects of heating of the motor in use.

**Claims**

1. In a rotor for use in a miniature motor, the rotor including a core having a plurality of laminations of magnetic material, at least one winding wound around the laminations, a shaft extending axially through the center of the laminations and a commutator mounted on the shaft and located near one end of the laminations and coaxial with the laminations, the improvement comprising: cooling means contacting at least the laminations for conducting heat away from the laminations and defining air directing means for directing air axially of the rotor as the rotor rotates.

2. The rotor according to claim 1 wherein said cooling means is formed integrally with said laminations.

3. The rotor according to claim 1 wherein said cooling means is mounted on said laminations and said windings are wound therearound.

4. The rotor according to claim 3 wherein said cooling means comprises a blower element mounted on the end of the laminations proximal to the commutator and including a plurality of blades which extend in the direction of the axis of the rotor for moving air upon rotation of the rotor.

5. The rotor according to claim 4 wherein said cooling means comprises a further blower element mounted on the end of the laminations most distal from the commutator.

6. The rotor according to claim 3 wherein said cooling means comprises a blower element mounted on the end of the laminations distal to the commutator and including a plurality of blades which extend in the direction of the axis of the rotor for moving air upon rotation of the rotor.

7. The rotor according to claim 1 wherein said cooling means comprises the one of said laminations that is most proximal to the commutator, said one lamination defining a plurality of blades extending in the direction of the axis of the rotor, for moving air upon rotation of the rotor.

8. The rotor according to claim 7 wherein said cooling means further comprises a further one of the laminations that is most distal from the commutator, said further lamination defining a plurality of blades extending in the direction of the axis of the rotor.

9. The rotor according to claim 3 wherein said cooling means comprises a blower element generally planar in shape and having a hub portion, a plurality of arcuate segments and a plurality of spoke portions extending outward radially from said hub portion and supporting said arcuate segments, each segment having its ends bent at an angle relative to the plane of the segment, defining said blades.

10. In a rotor for use in a miniature motor, the rotor including a core having a plurality of laminations of magnetic material, a plurality of windings wound around the laminations, a shaft extending through the center of the laminations and a commutator mounted on the shaft and located near one end of the laminations and extending coaxial to the laminations, the improvement comprising: at least one blower element constructed and arranged to create air flow outwardly from the rotor near one end of the laminations, said blower element being stacked together with the laminations and the windings being wound on portions of the laminations and of said blower element, and said blower element including a plurality of blades which extend in the direction of the axis of the rotor near the outer edge of the laminations.

11. The rotor according to claim 10 wherein said blower element comprises one of said laminations.

12. The rotor according to claim 10 wherein said blower element is mounted on the end of said laminations that is most proximal to the commutator.

13. The rotor according to claim 10 wherein said blower element is mounted on the end of the laminations most distal from the commutator.

14. The rotor according to claim 10 wherein said blower element is of a heat conducting material and is in thermal contact with the laminations.

FIG. 1

FIG. 2

FIG. 3